# EUROPEAN PATENT APPLICATION

(11) **EP 3 296 672 A1**
(43) Date of publication of application: **21.03.2018**
(21) Application number: 16792376.2
(22) Date of filing: 10.05.2016
(51) Int. Cl.: F25D 23/06, F25D 23/02

(54) **DOMESTIC ELECTRIC APPLIANCE**

(30) Priority: 11.05.2015 JP 2015096159; 11.05.2015 JP 2015096160
(71) Applicant: Panasonic Intellectual Property Management Co., Ltd., Osaka-shi, Osaka 540-6207 (JP)
(72) Inventor: HORII, Shin'ichi, Osaka-shi, Osaka 540-6207 (JP)
(74) Representative: Eisenführ Speiser
(86) International application number: PCT/JP2016/002284
(87) International publication number: WO 2016/181647

(57) **Abstract**

A domestic electric appliance includes, in the inside of a body, interior member (30) on which a coating film layer having a lacquer containing paint having an antibacterial effect is formed. A plurality of coating film layers are formed on interior member (30), and lacquer containing coating film layer (34) which is an outermost layer out of the plurality of coating film layers is formed of a lacquer paint containing an ultraviolet curing type lacquer containing paint as a main component.

## Description

### TECHNICAL FIELD

The present invention relates to various types of household products which are provided to be used in applications such as refrigeration and freezing, cooking, household chores, aesthetics, medical care.

### BACKGROUND ART

In general, with respect to household products which are mainly used for storage of food and storage of beauty products and medical products, it is often the case that an interior member of an internal space is required to possess cleanliness and an antibacterial effect is applied to the interior member (see PTL 1). Various base materials such as a resin and metal are used for forming the interior member of such household product. However, the base material of the conventional interior member does not have a function of imparting the cleanliness. Accordingly, in general, an antibacterial agent or the like is added to the base material of the interior member or coating is applied to a surface of the base material of the interior member to impart an antibacterial effect.

However, there is still room for improvement with respect to the enhancement of a design property simultaneously with imparting of an antibacterial function.

Further, in general, in household products such as a refrigerator, an air conditioning unit, a washing machine, a microwave oven, a rice cooker, a vacuum cleaner, an air purifier and power-operated tooth brush, an ornamental exterior member such as an ornamental exterior plate is used as a member which forms an external appearance. Such an ornamental exterior member is formed by applying a coating or a colored film to a surface of a metal plate or a resin formed body or the like (see PTL 2 and PTL 3, for example).

However, such a conventional ornamental exterior member has neither gloss nor feeling of depth in color, pattern and the like, and there is still room for enhancement of texture.

A lacquer containing paint is disclosed in PTL 4 to PTL 7.

### Citation List

### Patent Literature

PTL 1: Japanese Patent No. 3415647
PTL 2: Unexamined Japanese Patent Publication No. 2004-278891
PTL 3: Unexamined Japanese Patent Publication No. 2008-101805
PTL 4: Japanese Patent No. 2821110
PTL 5: Japanese Patent No. 3833202
PTL 6: Unexamined Japanese Patent Publication No. 8-41166
PTL 7: Japanese Patent No. 4868390

### SUMMARY OF THE INVENTION

The present invention has been made in view of such points, and it is an object of the present invention to provide a domestic electric appliance provided with an interior member having a design property as well as an antibacterial property.

To be more specific, a domestic electric appliance according to an example of an exemplary embodiment of the present invention includes: a body having an opening portion; and a door mounted on the opening portion of the body. The domestic electric appliance includes an interior member in an inside of the body, and the interior member includes a coating film layer having a lacquer containing paint which has an antibacterial function.

With such a configuration, it is possible to provide a domestic electric appliance provided with an interior which has cleanliness brought about by the lacquer containing paint having the antibacterial function and, at the same time, a high design property having gloss and feeling of depth and the like which cannot be expressed by a general-purpose-use interior member in the inside of the body including the inside of the door. With such a configuration, it is possible to provide a domestic electric appliance provided with an interior member which realizes both the acquisition of the antibacterial property and the acquisition of the design property where food, beauty products, medical products and the like can be stored and preserved hygienically and safely, and a user can sense visual joy through the high-level design property.

The domestic electric appliance according to one example of the exemplary embodiment of the present invention may further include an exterior member having a coating film layer which has a lacquer containing paint. The exterior member may be detachably mounted on the body.

With such a configuration, it is possible to acquire a domestic electric appliance with an external appearance which has the design property such as gloss and feeling of depth which cannot be expressed by a general-purpose-use coating or film mounting. The exterior member mounted on the body of the domestic electric appliance can be easily changed or removed from the body. Accordingly, a change in design can be easily performed with respect to the same body. Care such as cleaning of the exterior member can be also performed easily. It is possible to provide a domestic electric appliance having the antibacterial property and the design property on both an interior surface and an exterior surface.

In the domestic electric appliance according to an example of the exemplary embodiment of the present invention, the coating film layer may contain an ultraviolet curing type lacquer containing paint as a main component. With such a configuration, it is possible to provide an interior member which has an antibacterial function as well as the design property such as gloss and feeling of depth which cannot be expressed by a general-purpose-use coating and film mounting, and a domestic electric appliance provided with the interior member within a short time and at a low cost.

In the domestic electric appliance according to one example of the exemplary embodiment of the present invention, the interior member may be detachably formed on the body. With such a configuration, any smudge adhered to the interior member during use of the domestic electric appliance can be cleaned by removing the interior member from the body and hence, cleanliness can be ensured over a long period.

In the domestic electric appliance according to one example of the exemplary embodiment of the present invention, a placing shelf may be disposed in the inside of the body, and at least a portion of the placing shelf may be constituted by the interior member. With such a configuration, imparting of the antibacterial property to a surface of the placing shelf with which an object to be placed on the placing shelf is brought into contact and imparting of the design property to the placing shelf can be simultaneously realized.

In the domestic electric appliance according to one example of the exemplary embodiment of the present invention, a storage container may be disposed in the inside of the body, and at least a portion of the storage container may be constituted by the interior member. With such a configuration, imparting of the antibacterial property to a surface of the storage container with which an object to be stored is brought into contact and imparting of the design property to the storage container can be simultaneously realized.

In the domestic electric appliance according to one example of the exemplary embodiment of the present invention, a cooling plate may be disposed in the inside of the body, and at least a portion of the cooling plate may be constituted by the interior member. With such a configuration, it is possible to place an object which requires preservation at a low temperature can be placed on the cooling plate having the antibacterial property and the design property.

The domestic electric appliance according to one example of the exemplary embodiment of the present invention may include an inner box and an outer box, and the interior member may be integrally formed with the inner box. With such a configuration, the antibacterial property and the design property can be imparted to the whole space in the inside of the body.

In the domestic electric appliance according to one example of the exemplary embodiment of the present invention, the exterior member may be integrally formed with a member which forms an external appearance of the body (the door or the like, for example). With such a configuration, coating of the coating film layer having the lacquer containing paint can be applied to the exterior member per se. Accordingly, it is possible to impart complicated pattern and colors to the domestic electric appliance thus providing a domestic electric appliance having the high design property.

In the domestic electric appliance according to one example of the exemplary embodiment of the present invention, the exterior member may be formed as a part separate from a member which forms an external appearance of the body. With such a configuration, the formation of the coating film layer having the lacquer containing paint can be performed by the exterior member alone. Accordingly, the enhancement of productivity and the suppression of increase in cost can be realized.

In the domestic electric appliance according to one example of the exemplary embodiment of the present invention, a plurality of coating film layers including the coating film layer having the antibacterial function may be formed on the interior member, and at least one of the plurality of coating film layers may have a luminous material. With such a configuration, the domestic electric appliance can have the antibacterial function and, at the same time, the design property of the domestic electric appliance can be further enhanced by imparting gloss, feeling of depth and colorfulness to the domestic electric appliance.

In the domestic electric appliance according to one example of the exemplary embodiment of the present invention, the exterior member has a plurality of coating film layers having a coating film layer, and at least one of the plurality of coating film layers may have a luminous material. With such a configuration, it is possible to impart colorfulness as well as gloss and feeling of depth to the domestic electric appliance and hence, the design property of the domestic electric appliance can be further enhanced.

The domestic electric appliance according to one example of the exemplary embodiment of the present invention may further include an antibacterial device in the inside of the body. With such a configuration, an antibacterial effect in the whole space of the body with which the interior member cannot be brought into contact can be enhanced.

The domestic electric appliance according to one example of the exemplary embodiment of the present invention may further include a cooling device in the inside of the body. With such a configuration, the whole space in the inside of the body can be brought into a low temperature state and hence, the growth of bacteria can be suppressed whereby the antibacterial effect can be further enhanced.

The domestic electric appliance according to one example of the exemplary embodiment of the present invention may include a heat insulating member between the inner box and the outer box of the body. With such a configuration, a temperature of a space in the inside of the body cooled by the cooling device can be stably maintained and, at the same time, the consumption of energy can be suppressed.

### BRIEF DESCRIPTION OF DRAWINGS

FIG. 1 is a perspective view of a refrigeration storage as one example of a domestic electric appliance according to a first exemplary embodiment of the present invention.
FIG. 2 is a cross-sectional view of the refrigeration storage according to the first exemplary embodiment of the present invention.
FIG. 3 is an enlarged cross-sectional view of an interior member of the refrigeration storage according to the first exemplary embodiment of the present invention.
FIG. 4 is a front view showing an ornamental example of the interior member of the refrigeration storage according to the first exemplary embodiment of the present invention.
FIG. 5A is an enlarged cross-sectional view of an interior member and an exterior member of a domestic electric appliance according to a second exemplary embodiment and a sixth exemplary embodiment of the present invention.
FIG. 5B is an enlarged front view of a lacquering portion of the interior member and the exterior member of the domestic electric appliance according to the second exemplary embodiment and the sixth exemplary embodiment of the present invention.
FIG. 6 is an enlarged cross-sectional view of an interior member and an exterior member of a domestic electric appliance according to a third exemplary embodiment and a seventh exemplary embodiment of the present invention.
FIG. 7 is an enlarged cross-sectional view of an interior member and an exterior member of a domestic electric appliance according to a fourth exemplary embodiment and an eighth exemplary embodiment of the present invention.
FIG. 8 is a perspective view of an external appearance of a refrigerator as one example of a domestic electric appliance according to a fifth exemplary embodiment of the present invention.
FIG. 9 is a cross-sectional view of one of doors of the refrigerator according to the fifth exemplary embodiment of the present invention.
FIG. 10 is a schematic front view of the door of the refrigerator according to the fifth exemplary embodiment of the present invention.
FIG. 11 is a perspective view of an ornamental exterior plate used as the door of the refrigerator according to the fifth exemplary embodiment of the present invention.
FIG. 12 is an enlarged cross-sectional view of the ornamental exterior plate used as the door of the refrigerator according to the fifth exemplary embodiment of the present invention.
FIG. 13A is a front view showing an ornamental example of the door of the refrigerator according to the fifth exemplary embodiment of the present invention.
FIG. 13B is a front view showing another ornamental example of the door of the refrigerator according to the fifth exemplary embodiment of the present invention.
FIG. 13C is a front view showing yet another ornamental example of the door of the refrigerator according to the fifth exemplary embodiment of the present invention.
FIG. 14 is a cross-sectional view of an ornamental exterior plate according to a ninth exemplary embodiment of the present invention.
FIG. 15 is a cross-sectional view of an ornamental exterior plate according to a tenth exemplary embodiment of the present invention.
FIG. 16 is a cross-sectional view of an ornamental exterior plate according to an eleventh exemplary embodiment of the present invention.

### DESCRIPTION OF EMBODIMENTS

Exemplary embodiments according to the present invention are hereinafter described with reference to the drawings. In the exemplary embodiments described hereinafter, although a domestic electric appliance is described by taking a refrigeration storage as an example, the domestic electric appliance is not limited to the refrigeration storage, and also a configuration of an ornamental interior member is not limited to the configurations of these exemplary embodiments.

### (First exemplary embodiment)

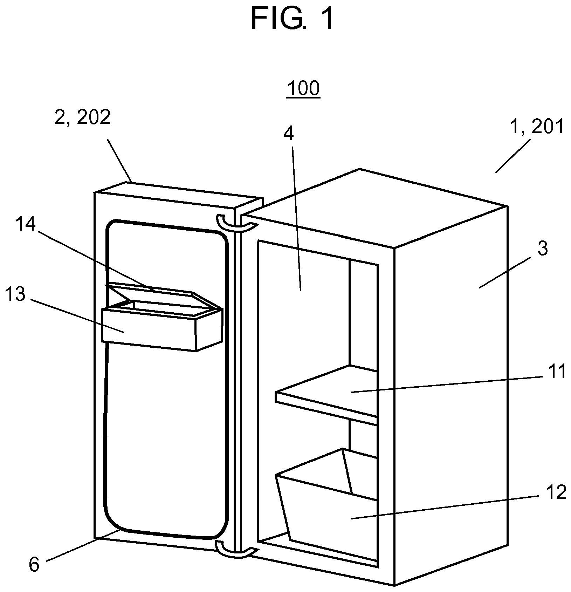

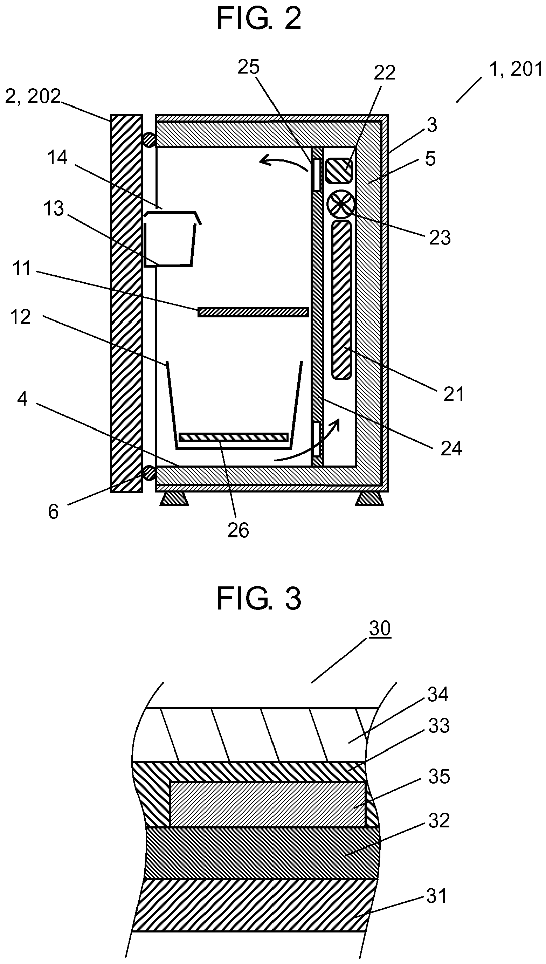

FIG. 1 is a perspective view of a refrigeration storage according to a first exemplary embodiment of the present invention, and FIG. 2 is a cross-sectional view of the refrigeration storage according to the first exemplary embodiment of the present invention.

In FIG. 1 and FIG. 2, body 1, 201 of refrigerator 100 includes a storage chamber where a temperature is regulated at a refrigerating temperature, and openable and closable door 2 is disposed on a front surface of the storage chamber. Body 1, 201 includes outer box 3 and inner box 4, and heat insulating member 5 made of urethane foam, polystyrene foam or the like is disposed in a space in the inside of body 1, 201. On a storage chamber side of door 2, packing 6 for ensuring sealability of the storage chamber is provided.

In the inside of body 1, 201 which is held in a hermetically sealed state, cooling device 21 and antibacterial device 22 are disposed. Air in the inside of body 1, 201 which is held in a hermetically sealed state is made to circulate through an internal space of body 1, 201 from a blow-off hole formed in device cover 24 disposed in front of cooling device 21 and antibacterial device 22 by air supplying fan 23 as indicated by arrows shown in FIG. 2.

In the inside of body 1, 201, shelf 11 and case (storage container) 12 for storing objects to be stored such as food or beauty products are disposed. On a bottom surface of case 12, cooling plate 26 is disposed. Hermetically-sealed case 13 and case lid 14 which can open and close hermetically-sealed case 13 are disposed on an inner side of body 1, 201 of door 2.

A lacquer containing coating film is applied by coating to an inner surface (storage chamber surface) of inner body 4, and surfaces of shelf 11, case 12, hermetically-sealed case 13, case lid 14, device cover 24, cooling plate 26, a water supply tank, a door shelf and the like exposed to the space in body 1, 201. Although the interior members constituting surfaces of the above-mentioned respective parts differ from each other in shape and material, in the exemplary embodiments of the present invention, these interior members are collectively referred to as interior member 30.

As shown in FIG. 3, with respect to interior member 30, first coating film layer 32 is applied by coating onto interior base member 31, second coating film layer 33 is applied by coating onto first coating film layer 32, and lacquer containing coating film layer 34 is applied by coating onto second coating film layer 33 (a most exterior surface in this exemplary embodiment). Decorative layer 35 such as a gold lacquer or a foil is interposed between first coating film layer 32 and second coating film layer 33. Further, an exterior member on which a coating film layer having a lacquer containing paint is formed may be mounted on body 1, 201.

In general, Japanese lacquer coating has gloss and feeling of depth inherent to Japanese lacquer coating on a surface of Japanese lacquer coating, and has a characteristic that the gloss and the feeling of depth are increased more and more with the lapse of time. On the other hand, it is necessary for the lacquer coating to be dried for a long time in high humidity atmosphere and, further, it is necessary to pay careful attention to control of humidity and temperature and hence, the lacquer coating has a drawback that productivity is poor. This is because of dehydrogenation reaction of urushiol brought about by enzyme (laccase) contained in a lacquer and autoxidation brought about by oxygen in atmospheric air. A reaction speed is slow and hence, large amounts of time and effort are required for a coating step thus becoming one of factors which cases the lowering of operability.

In this exemplary embodiment, a lacquer containing paint which can improve such lowering of operability is used. For example, a photopolymerization type lacquer paint and a lacquer printing ink disclosed in PTL 4 and PTL 5 containing a monomer or an oligomer having an acrylic acid ester skeleton are used. Alternatively, a photopolymerization type lacquer containing paint made of a monomer which is converted into an acrylate ester derivative from an epoxy derivative of cashew oil by chemical reaction disclosed in PTL 6 is used. Alternatively, a photo-curing lacquer containing paint is used which contains an auto-oxidative coating film component selected from a group consisting of a cationically polymerizable compound, a photopolymerization initiator, a lacquer and cashew oil disclosed in PTL 7.

It has been generally known that a lacquer coating film has an antibacterial action. Also in this exemplary embodiment, a lacquer containing coating film having an antibacterial function is used, and the internal surface (inner surface) of body 1, 201 of inner box 4, shelf 11, case 12, hermetically-sealed case 13, and case lid 14 which are coated with the lacquer containing coating film are provided to body 1, 201 while having an antibacterial function. With such a configuration, food or the like can be hygienically stored. Since case lid 14 is mounted on hermetically-sealed case 13 having the antibacterial function openably, food and the like can be stored in hermetically-sealed case 13 without being affected by other food and the like stored in body 1, 201.

As shown in FIG. 2, cooling plate 26 is disposed on a bottom surface of case 12. Cooling plate 26 transmits a cooling temperature in the space of body 1, 201 to a placed object such as food with high sensitivity by being brought into contact with the placed object such as food.

Cooling device 21 mounted in body 1, 201 regulates a temperature in the inside of body 1, 201 at a stable temperature by air supplying fan 23 and, at the same time, makes fine particles injected from antibacterial device 22 circulate in the inside of body 1, 201. With such a configuration, an antibacterial effect can be enhanced synergistically by the interior member having the antibacterial function and the whole space in body 1, 201.

The lacquer containing coating film is applied by coating also to device cover 24 disposed on a front surface of cooling device 21. With such a configuration, the antibacterial effect can be imparted into air in the inside of the space of body 1, 201 by circulating air and hence, the antibacterial effect can be imparted also to an area around cooling device 21 where humidity is easily increased and a peripheral portion of discharge hole 25 where dew condensation is liable to occur.

FIG. 3 is an enlarged cross-sectional view of the interior member according to this exemplary embodiment formed by using a lacquer paint which contains an ultraviolet curing type lacquer containing paint containing 10% or more of a lacquer liquid which is a photo-curing lacquer containing paint as a main component.

In FIG. 3, interior base member 31 of interior member 30 is formed of a plate made of glass, a plate made of a synthetic resin, or a plate made of metal such as stainless steel or aluminum (for example, a stainless steel plate in this exemplary embodiment). A brightening treatment is applied to a surface of interior base member 31 by polishing, additional working of a luster material, a chemical treatment or the like. First coating film layer 32 is formed on a brightening treatment surface of interior base member 31, and first coating film layer 32 is formed of a colorless and transparent or a colored urethane-based resin paint. In this exemplary embodiment, first coating film layer 32 which is lightly colored with a color which becomes a base is used. First coating film layer 32 also has an effect of ensuring adhesion with interior base member 31. Decorative layer 35 such as a lacquering is formed using gold powder, color powder, mother-of-pearl, a foil or the like. Second coating film layer 33 is formed on decorative layer 35 and first coating film layer 32 which becomes a base colored layer, and is formed of a colorless and transparent urethane-based resin paint. Lacquer containing coating film layer 34 is formed on second coating film layer 33, and is formed of a lacquer paint which contains an ultraviolet curing type lacquer containing paint containing 10% or more of a lacquer liquid as a main component.

A manufacturing method of interior member 30 having the above-mentioned configuration is described hereinafter. Firstly, a brightening treatment is applied to the surface of interior base member 31 by polishing, additional working of a luster material, a chemical treatment or the like. First coating film layer 32 which becomes the base colored layer is applied by coating or by printing onto interior base member 31, and is cured by drying. Next, decorative layer 35 referred to as a lacquering is formed by dispersing gold powder, color powder, mother-of-pearl, a foil or the like to appropriate portions of first coating film layer 32. In such a state, second coating film layer 33 is formed on decorative layer 35 and first coating film layer 32 as an intermediate coating. Thereafter, a lacquer paint containing an ultraviolet curing type lacquer containing paint as a main component is applied by coating or printing onto second coating film layer 33 and, in such a state, the lacquer paint is dried and cured by irradiating ultraviolet rays thus obtaining interior member 30.

The formation of the coating film layer and lacquer containing coating film layer 34 on interior member 30 may be performed at a stage of a part before being completed as interior member 30, may be performed in a flat plate state before work-forming, or may be performed after completion of interior member 30.

On interior member 30 formed as described above, lacquer containing coating film layer 34 is formed by using a lacquer paint which contains an ultraviolet curing type lacquer containing paint as a main component. Accordingly, lacquer containing coating film layer 34 can be dried and cured in approximately several tens of seconds by irradiating ultraviolet rays. Accordingly, compared to a case where a conventional-type lacquer paint is used, productivity can be remarkably enhanced thus realizing the mass production. Further, lacquer containing coating film layer 34 can be dried and cured in approximately several tens of seconds and hence, feeling of depth can be enhanced by repeatedly coating a lacquer paint several times and, at the same time, even when a lacquer paint is repeatedly coated several times, it is possible to obtain the interior member which is excellent in productivity compared to a case where the conventional-type lacquer paint is used.

Further, lacquer containing coating film layer 34 is formed on interior base member 31 with first coating film layer 32 having high adhesion interposed between lacquer containing coating film layer 34 and interior base member 31 and hence, also in a case where a metal plate is used as interior base member 31, lacquer containing coating film layer 34 can be firmly adhered and held to interior base member 31 thus ensuring sufficient durability.

Particularly, in this exemplary embodiment, both first coating film layer 32 and second coating film layer 33 are made of a urethane resin having high adhesive strength and hence, it is possible to ensure a further sufficient adhesion durability.

In this exemplary embodiment, first coating film layer 32 which becomes the base colored layer and second coating film layer 33 can be formed such that first coating film layer 32 and second coating film layer 33 differ from each other in resin material and resin mixing ratio. That is, first coating film layer 32 which becomes the base colored layer can be formed using a resin material and the larger resin mixing ratio having the larger adhesive strength compared to a material for forming interior base member 31, and second coating film layer 33 can be formed by using a resin material and a resin mixing ratio excellent in adhesion to a lacquer paint containing an ultraviolet curing type lacquer containing paint as a main component and excellent in adhesion also to first coating film layer 32 which becomes the base colored layer. With such a configuration, no matter what interior base member 31 is made of any material, it is possible to provide interior member 30 having high adhesion durability.

First coating film layer 32 which becomes the base colored layer can hold decorative layer 35 by adhesion and, at the same time, prevents positional displacement of gold powder and color powder which constitute decorative layer 35 at the time of forming second coating film layer 33 thus enhancing an accuracy of a pattern of a lacquering. On the other hand, second coating film layer 33 is configured to cover decorative layer 35 and first coating film layer 32 and hence, a contact surface of second coating film layer 33 with lacquer containing coating film layer 34 is not made of two different kinds of materials, that is, materials for forming decorative layer 35 and first coating film layer 32 but only one kind of material which forms a second resin coating film layer, for example, in this exemplary embodiment, made of only a material having the same quality such as an urethane-based resin coated layer. With such a configuration, compared to a lacquer containing coating film layer which is formed by coating or the like a lacquer paint on different kinds of materials, reliability of inter-layer adhesion durability between respective layers which constitute interior member 30 can be further enhanced.

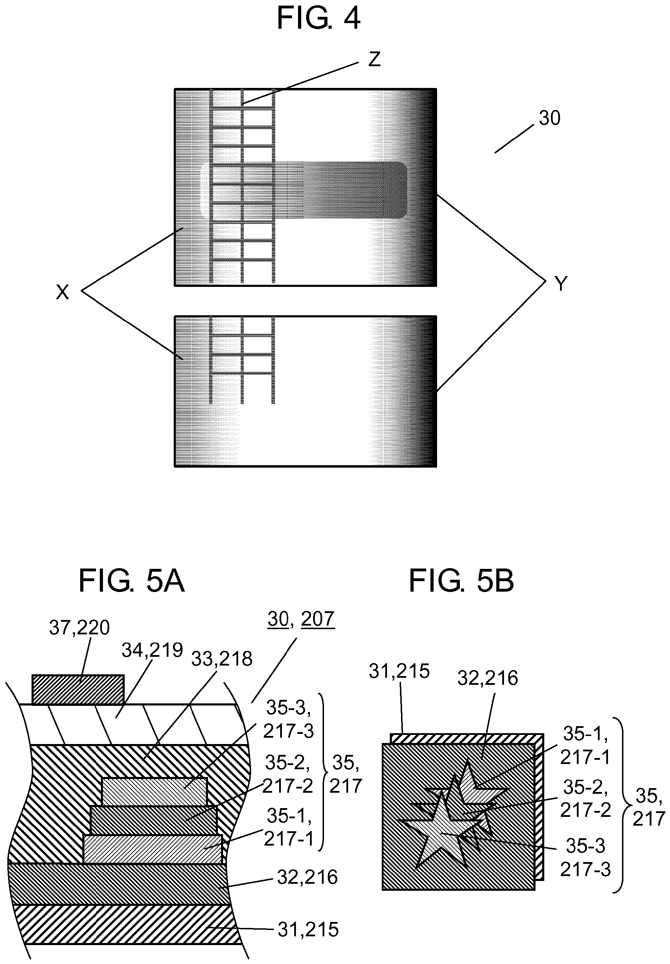

Further, first coating film layer 32 is formed on interior base member 31 and hence, by forming first coating film layer 32 as a base colored layer as in the case of this exemplary embodiment, an ornamental interior member having a large variety of colors can be acquired. Further, for example, as shown in FIG. 4, gradation such as shading X of colors and a changing of colors can be made on interior base member 31 as a unit or in a state where a plurality of interior base members 31 are connected to each other. As indicated by symbol Y in FIG. 4, coloring and gradation can be partially applied to decorative layer 35 on an upper layer of shading X, or as indicated by symbol Z in FIG. 4, an integral pattern (decorative layer) can be formed on a plurality of doors 2 provided to body 1, 201.

Further, the shading of color can be applied by changing a film thickness of lacquer containing coating film layer 34 by partially repeatedly coating a lacquer paint which contains an ultraviolet-curing-type lacquer containing paint as a main component while setting a color of first coating film layer 32 which becomes the base colored layer to a predetermined color density. With such a configuration, a light transmissivity changes corresponding to a film thickness of lacquer containing coating film layer 34 and hence, it appears that shading is applied to the surface as viewed from the outside. Further, the gradation such as the shading can be also formed by coating color powder to the surface of first coating film layer 32 which becomes the base colored layer and by changing a coating amount of color powder. In this manner, a pattern and the like can be formed in addition to the shading. The ornamentation such as the above-mentioned shading can be formed by suitable selection when necessary.

Further, a brightening treatment is applied to the surface of interior base member 31 and hence, by making first coating film layer 32 which becomes the base colored layer colorless transparent or light color in the same manner as second coating film layer 33, an appearance of lacquer containing coating film layer 34 as viewed from the surface can be made colorful. Accordingly, it is possible to obtain the interior member having higher texture and a domestic electric appliance using such an interior member.

In this exemplary embodiment, the brightening treatment is performed by applying polishing, additional working of a luster material, a chemical treatment or the like to the surface of interior base member 31. However, the application of brightening treatment is not limited to the above, and it is sufficient for the brightening treatment to be applied to any one of the coating film layers below an outermost layer (in this exemplary embodiment, lacquer containing coating film layer 34). For example, in the case of this exemplary embodiment, the brightening treatment may be applied by adding a luminous material made of metal powder or the like to first coating film layer 32 which becomes the base colored layer or second coating film layer 33.

On the other hand, in interior member 30 formed as described above, when lacquer containing coating film layer 34 is formed, although lacquer containing coating film layer 34 is cured in several tens of seconds, there may be a case where a state such as sagging appears on upper and lower end edge portions of lacquer containing coating film layer 34. Accordingly, if lacquer containing coating film layer 34 is used in such a state, there is a concern that unsightly interior member 30 which deteriorates a design property is formed. However, in this exemplary embodiment, an end edge portion of interior member 30 is covered by mounting of an end portion cover and hence, even when sagging or the like occurs at the end edge portion, there is no possibility that the sagging or the like is viewed from the outside thus maintaining a good appearance.

### (Second exemplary embodiment)

FIG. 5A is an enlarged cross-sectional view of an interior member of a domestic electric appliance according to a second exemplary embodiment of the present invention, and FIG. 5B is an enlarged front view of a lacquering portion of the interior member of the domestic electric appliance according to the second exemplary embodiment of the present invention. In FIG. 5A and FIG. 5B, parts identical with the parts in the first exemplary embodiment are given the same symbols and their description is omitted, and only parts which make the second exemplary embodiment different from the first exemplary embodiment are described.

In interior member 30 according to the second exemplary embodiment of the present invention, a plurality of decorative layers 35 are formed on a surface of first coating film layer 32 which becomes a base colored layer. That is, decorative layer 35 is constituted of three layers consisting by decorative layers 35-1, 35-2, 35-3, for example, and these decorative layers 35-1, 35-2, 35-3 are formed by using gold powder, color powder, mother-of-pearl, a foil or the like. Further, in this exemplary embodiment, second decorative layer 37 is formed also on a surface of lacquer containing coating film layer 34.

With such a configuration, with respect to interior member 30, in decorative layer 35, a lacquering is formed by overlapping decorative layers 35-1, 35-2, 35-3, for example and hence, it is possible to impart a sense of perspective to a pattern. In addition, second decorative layer 37 is formed also on the surface of lacquer containing coating film layer 34 and hence, the sense of perspective can be expressed also between decorative layers 35-1, 35-2, 35-3 and second decorative layer 37. Accordingly, it is possible to obtain interior member 30 having higher texture.

### (Third exemplary embodiment)

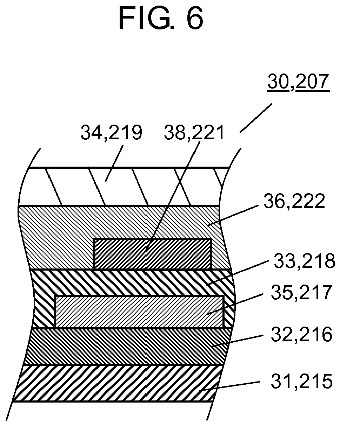

FIG. 6 is an enlarged cross-sectional view of an interior member of a domestic electric appliance according to a third exemplary embodiment of the present invention. In the third exemplary embodiment, parts identical with the parts of the first exemplary embodiment and the second exemplary embodiment are given the same symbols and their description is omitted, and only parts which make the third exemplary embodiment different from the first exemplary embodiment and the second exemplary embodiment are described.

In interior member 30 according to the third exemplary embodiment of the present invention, third decorative layer 38 is formed on second coating film layer 33, and third coating film layer 36 which forms an intermediate coating and is made of an urethane-based resin paint in the same manner as first coating film layer 32 and second coating film layer 33 is further formed on third decorative layer 38. Lacquer containing coating film layer 34 is further formed on third coating film layer 36. Third coating film layer 36 is configured such that a light refractive index of third coating film layer 36 is set lower than a light refractive index of lacquer containing coating film layer 34 by regulating an amount of urethane resin particles or the like.

With such a configuration, it is possible to obtain interior member 30 having higher texture where the feeling of depth is increased by the difference in light refractive index between lacquer containing coating film layer 34 and third coating film layer 36. Further, third coating film layer 36 having low refractive index is formed below lacquer containing coating film layer 34 and hence, reflection of light on a brightening layer formed on second coating film layer 33, first coating film layer 32 which becomes a base colored layer, or interior base member 31 can be suppressed thus imparting nuanced feeling of depth whereby texture can be further enhanced.

### (Fourth exemplary embodiment)

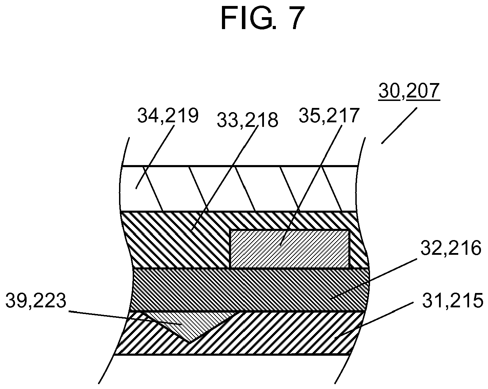

FIG. 7 is an enlarged cross-sectional view of an interior member of a domestic electric appliance according to a fourth exemplary embodiment of the present invention. Also in FIG. 7, parts identical with the parts of the first exemplary embodiment, the second exemplary embodiment, and the third exemplary embodiment are given the same symbols and their description is omitted, and the description is made mainly with respect to parts which make the fourth exemplary embodiment different from the first exemplary embodiment, the second exemplary embodiment, and the third exemplary embodiment.

In interior member 30 according to the fourth exemplary embodiment of the present invention, recessed portion 39 is formed on a surface of interior base member 31 by laser working or the like, and first coating film layer 32 which becomes a base colored layer, decorative layer 35, second coating film layer 33 and lacquer containing coating film layer 34 are formed on recessed portion 39.

With such a configuration, reflection of light on a recessed surface of recessed portion 39 differs depending on a viewing angle due to refraction of light on lacquer containing coating film layer 34 and hence, it is possible to impart variations to an appearance of a pattern formed by recessed portion 39 thus further enhancing texture of interior member 30. Particularly, by applying coloring to recessed portion 39, variations in appearance of the pattern formed by recessed portion 39 can be made further vivid thus enhancing the design property further effectively.

In the above-mentioned respective exemplary embodiments, the description is made with respect to the configuration of interior member 30 where interior base member 31 is used as the base, and the respective coating film layers and lacquer containing coating film layer 34 are formed on interior base member 31. However, interior member 30 may be configured such that the respective coating film layers other than interior base member 31 are formed into a film shape, and these film-shaped respective coating film layers are adhered to interior base member 31. With such a configuration, quality of the respective coating film layers can be made uniform thus realizing the reduction of cost.

When interior member 30 is made of a resin, a lacquer paint or a lacquer material may be preliminary kneaded in a resin. With such a configuration, it is possible to allow interior base member 31 per se to possess an antibacterial function which a lacquer has, thus easily imparting texture and an antibacterial function of the lacquer to interior member 30.

In the above-mentioned respective exemplary embodiments, the refrigeration storage is exemplified as the domestic electric appliance using interior member 30. However, the domestic electric appliance is not limited to the refrigeration storage, and a freezer, a microwave oven, a beauty appliance, a medical appliance, a household storage appliance such as a system kitchen, a portable outdoors domestic electric appliance and the like can be named.

### (Fifth exemplary embodiment)

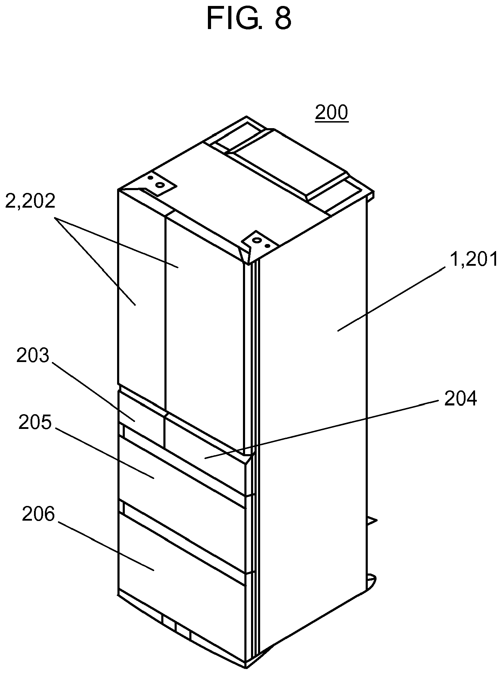

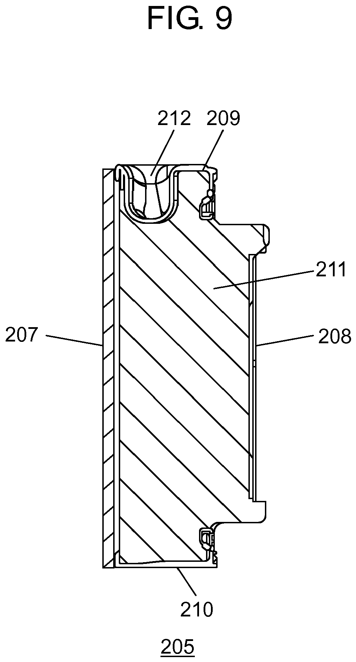

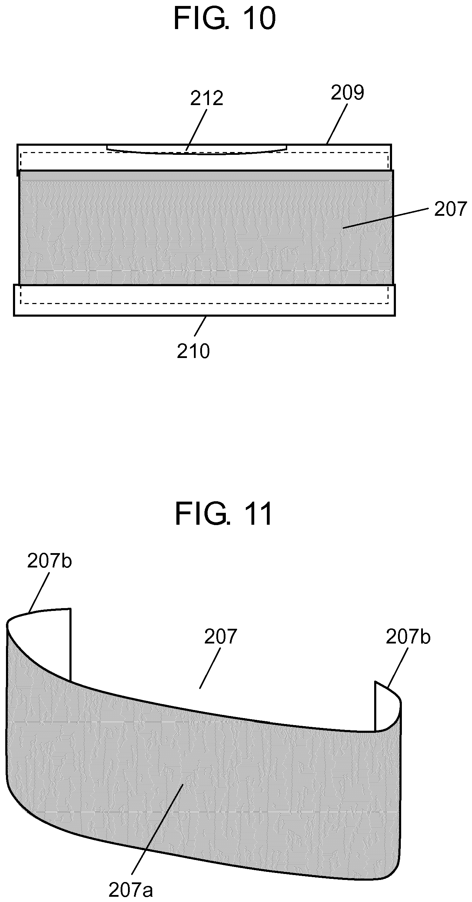

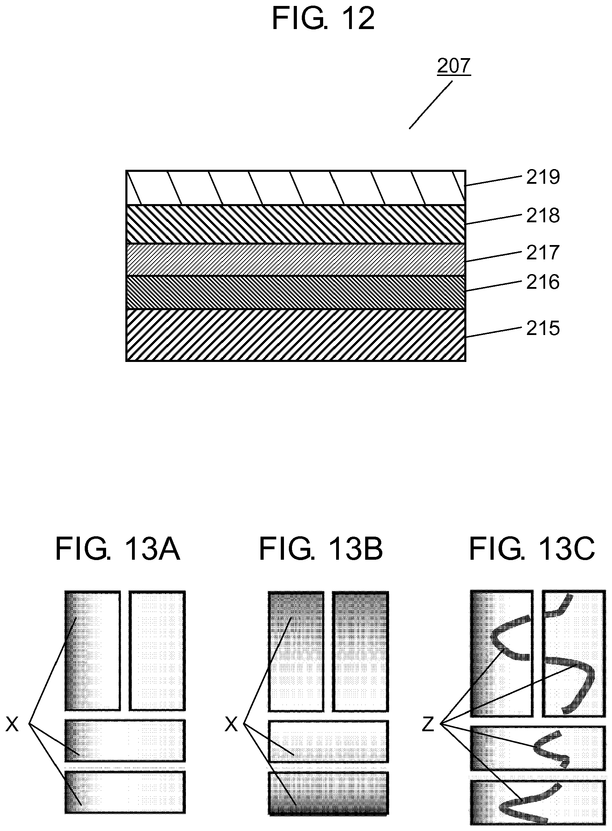

FIG. 8 is a perspective view of an external appearance of a refrigerator as one example of a domestic electric appliance according to a fifth exemplary embodiment of the present invention. FIG. 9 is across-sectional view of one of doors of the refrigerator according to the fifth exemplary embodiment of the present invention, and FIG. 10 is a schematic front view of the door of the refrigerator according to the fifth exemplary embodiment shown in FIG. 9. FIG. 11 is a perspective view of an ornamental exterior plate used as the door of the refrigerator according to the fifth exemplary embodiment shown in FIG. 9, and FIG. 12 is an enlarged cross-sectional view of the ornamental exterior plate used as the door of the refrigerator according to the fifth exemplary embodiment shown in FIG. 9.

In FIG. 8, in refrigerator 200 which is one example of the domestic electric appliance according to the fifth exemplary embodiment of the present invention, storage chambers respectively referred to as a refrigerating chamber, a freezing chamber, a partially freezing chamber, a vegetable chamber and the like are provided to body 1, 201. Further, openable and closable doors 2, 202, 203, 204, 205, 206 are respectively disposed on a front surface of body 1, 201. Out of doors 202 to 206 which are members constituting refrigerator 200, doors 2, 202 which open and close the refrigerating chamber are respectively formed of a double hinged door, and other remaining doors 203 to 206 are respectively formed of a drawer-type door.

All doors 2, 202, 203, 204, 205, 206 are respectively formed of heat insulating doors having substantially the same heat insulating configuration. One example of the heat insulating structure of the heat insulating door constituting doors 2, 202, 203, 204, 205, 206 is described with reference to FIG. 9 to FIG. 11.

As shown in FIG. 9, drawer-type door 205 is formed of ornamental exterior plate (exterior member) 207 which constitutes an external appearance of refrigerator 200, synthetic-resin-made inner surface plate 208 which constitutes an inner surface of door 205, synthetic-resin-made ornamental cover 209 which is mounted on upper portions of both ornamental exterior plate 207 and inner surface plate 208, synthetic-resin-made ornamental cover 210 which is mounted on lower portions of both ornamental exterior plate 207 and inner surface plate 208, and foamed heat insulating member 211 such as urethane which is filled in a space between ornamental exterior plate 207, inner surface plate 208, and ornamental covers 209, 210. Ornamental exterior plate 207 is mounted on an outer surface of door 205 disposed on the front surface of body 1, 201 detachably with respect to body 1, 201. Out of ornamental covers 209,210, on ornamental cover 209 positioned on an upper side, grip portion 212 which is indented toward a foamed heat insulating member 211 may be formed.

A surface of ornamental exterior plate 207 which constitutes the external appearance of refrigerator 200 may be formed into a curved surface. For example, as shown in FIG. 11, a surface of ornamental exterior plate 207 may be formed into a curved surface by bending side surface portions 207b on both sides of front surface portion 207a. With such a configuration, ornamental exterior plate 207 can be easily mounted on or removed from body 1, 201 and, at the same time, a pattern or gradation continuing from a front surface to a side surface of refrigerator 200 can be applied to refrigerator 200 and hence, the design property of refrigerator 200 can be enhanced.

Ornamental exterior plate 207 according to this exemplary embodiment has a coating film layer having a lacquer containing paint. To be more specific, a lacquer coating is applied to the surface of ornamental exterior plate 207. With such a configuration, it is possible to acquire an exterior member possessing gloss and feeling of depth which cannot be expressed by a general-purpose-use coating or film mounting, and refrigerator 200 which uses such an exterior member.

Ornamental exterior plate 207 according to this exemplary embodiment may be integrally formed with other members which are mounted on body 1, 201 of refrigerator 200, for example, inner surface plate 208 of door 205, ornamental covers 209, 210, and foamed heat insulating member 211. With such a configuration, coating of the coating film layer having the lacquer containing paint can be applied to ornamental exterior plate 207 itself. Accordingly, it is possible to impart complicated pattern and colors to refrigerator 200 thus providing refrigerator 200 having the high design property.

Ornamental exterior plate 207 may be formed as a part separate from other parts mounted on body 1, 201 of refrigerator 200. With such a configuration, the formation of the coating film layer having the lacquer containing paint can be performed by the exterior member alone. Accordingly, the enhancement of productivity and the suppression of increase in cost can be realized.

In general, Japanese lacquer coating has gloss and feeling of depth inherent to Japanese lacquer coating on a surface of Japanese lacquer coating, and has a characteristic that the gloss and the feeling of depth are increased more and more with the lapse of time. On the other hand, it is necessary for the lacquer coating to be dried for a long time in high humidity atmosphere and, further, it is necessary to pay careful attention to control of humidity and temperature and hence, the lacquer coating has a drawback that productivity is poor. This is because of dehydrogenation reaction of urushiol brought about by enzyme (laccase) contained in a lacquer and autoxidation brought about by oxygen in atmospheric air, and a reaction speed is slow and hence, large amounts of time and effort are required for a coating step thus becoming one of factors which causes the lowering of operability.

In this exemplary embodiment, a lacquer containing paint which can improve such lowering of operability, for example, a photopolymerization type lacquer paint containing a monomer or an oligomer having acrylic acid ester skeleton and a lacquer printing ink disclosed in PTL 4 and PTL 5 are used. Alternatively, a photopolymerization type lacquer containing paint made of a monomer which is obtained by converting an epoxy derivative of cashew oil into an acrylate ester derivative due to a chemical reaction disclosed in PTL 6 is used. Alternatively, a photo-curing lacquer containing paint is used which contains an auto-oxidative coating film component selected from a group consisting of a cationically polymerizable compound, a photopolymerization initiator, a lacquer and cashew oil disclosed in PTL 7.

Ornamental exterior plate 207 in this exemplary embodiment may be configured to include a plurality of coating film layers, and at least one of the plurality of coating film layers may have a luminous material. Hereinafter, one example of ornamental exterior plate 207 having such a configuration is described with reference to FIG. 12.

Ornamental exterior plate 207 shown in FIG. 12 is formed of a lacquer paint which contains an ultraviolet curing type lacquer containing paint containing 10% or more of a lacquer liquid as a main component.

In FIG. 12, exterior base member 215 of ornamental exterior plate 207 is formed of a plate made of a synthetic resin, or a plate made of metal such as stainless steel or aluminum (for example, a stainless steel plate in this exemplary embodiment). A brightening treatment is applied to a surface of exterior base member 215 by polishing, additional working of a luster material, a chemical treatment or the like.

First resin coating film layer 216 formed on a brightening treatment surface of exterior base member 215 is formed of a colorless and transparent or a colored urethane-based resin paint. In this exemplary embodiment, first resin coating film layer 216 is lightly colored with a color which becomes a base. Decorative layer 217 such as a lacquering is formed of gold powder, color powder, mother-of-pearl, a foil or the like. Second resin coating film layer 218 formed on decorative layer 217 and first resin coating film layer 216 which becomes a base colored layer is formed of a colorless and transparent urethane-based resin paint. Lacquer containing coating film layer 219 formed on second resin coating film layer 218 is formed of a lacquer paint which contains an ultraviolet curing type lacquer containing paint containing 10% or more of a lacquer liquid as a main component.

With such a configuration, it is possible to impart colorfulness as well as gloss and feeling of depth to refrigerator 200 and hence, the design property of refrigerator 200 can be further enhanced.

A manufacturing method of ornamental exterior plate 207 having the above-mentioned configuration is described hereinafter. Firstly, a brightening treatment is applied to a surface of exterior base member 215 by polishing, additional working of a luster material, a chemical treatment or the like, and first resin coating film layer 216 which becomes the base colored layer is applied by coating or by printing onto the surface of exterior base member 215, and is cured by drying. Next, decorative layer 217 referred to as a lacquering is formed by dispersing gold powder, color powder, mother-of-pearl, a foil or the like to appropriate portions of first resin coating film layer 216. In such a state, second resin coating film layer 218 which forms an intermediate coating is formed on decorative layer 217 and first resin coating film layer 216. Thereafter, lacquer containing coating film layer 219 containing an ultraviolet curing type lacquer containing paint as a main component is applied by coating or printing to a surface of second resin coating film layer 218 and, in such a state, lacquer containing coating film layer 219 is dried and cured by irradiating ultraviolet rays thus obtaining ornamental exterior plate 207.

The formation of the resin coating film layer and lacquer containing coating film layer 219 on ornamental exterior plate 207 may be performed at a stage where these layers are in a flat plate state before being completed as ornamental exterior plate 207, or may be performed after applying bending, drawing, molding or the like.

With respect to ornamental exterior plate 207 formed as described above, since lacquer containing coating film layer 219 is formed by using a lacquer paint containing ultraviolet curing type lacquer containing paint as a main component, ornamental exterior plate 207 can be dried and cured in several tens of seconds by irradiating ultraviolet rays to lacquer containing coating film layer 219. Accordingly, compared to a case where a conventional-type lacquer paint is used, productivity can be remarkably enhanced thus realizing the mass production. Further, lacquer containing coating film layer 219 can be dried and cured in approximately several tens of seconds and hence, feeling of depth can be enhanced by repeatedly coating a lacquer paint several times and, at the same time, even when a lacquer paint is repeatedly coated, it is possible to obtain the ornamental exterior member which is excellent in productivity compared to a case where a conventional-type lacquer paint is used.

Further, lacquer containing coating film layer 219 is formed on exterior base member 215 with first resin coating film layer 216 interposed between lacquer containing coating film layer 219 and exterior base member 215 and hence, even when exterior base member 215 is formed of a metal plate, lacquer containing coating film layer 219 can be firmly adhered and held to exterior base member 215 thus ensuring sufficient durability.

Particularly, in this exemplary embodiment, both first resin coating film layer 216 and second resin coating film layer 218 are made of a urethane resin having high adhesive strength and hence, it is possible to ensure a further sufficient adhesion durability.

First resin coating film layer 216 which becomes the base colored layer and second resin coating film layer 218 are formed such that first resin coating film layer 216 and second resin coating film layer 218 differ from each other in resin material and in resin mixing ratio. That is, first resin coating film layer 216 which becomes the base colored layer is formed of a resin material and a resin mixing ratio having high adhesive strength compared to a material for forming exterior base member 215. On the other hand, second resin coating film layer 218 can be formed by using a resin material and a resin mixing ratio excellent in adhesion to a lacquer paint containing an ultraviolet curing type lacquer containing paint as a main component and excellent in adhesion also to first resin coating film layer 216 which becomes the base colored layer. With such a configuration, no matter what exterior base member 215 is made of any material, it is possible to provide ornamental exterior plate 207 having high adhesion durability.

First resin coating film layer 216 which becomes the base colored layer can hold decorative layer 217 by adhesion and, at the same time, prevents positional displacement of gold powder and color powder which constitute decorative layer 217 at the time of forming second resin coating film layer 218 thus enhancing an accuracy of a pattern of a lacquering. On the other hand, second resin coating film layer 218 is configured to cover decorative layer 217 and hence, a contact area of second resin coating film layer 218 with lacquer containing coating film layer 219 is not made of two different kinds of materials, that is, materials for forming decorative layer 217 and first resin coating film layer 216 but only one kind of material which forms second resin coating film layer 218, for example, in this exemplary embodiment, made of only a material having the same quality, that is, an urethane-based resin paint layer. With such a configuration, compared to a lacquer containing coating film layer which is formed by coating or the like a lacquer paint on different kinds of materials, reliability of inter-layer adhesion durability between respective layers which constitute ornamental exterior plate 207 can be further enhanced.

Further, first resin coating film layer 216 is formed on a surface of exterior base member 215. Accordingly, by forming first resin coating film layer 216 as a base colored layer as in the case of this exemplary embodiment, ornamental exterior plate 207 having a large variety of colors can be acquired. For example, as shown in FIG. 13A to FIG. 13C, gradation such as shading X of colors and changing of colors can be applied to doors 202, 203, 204, 205, 206 as a unit or to a part of or the whole doors 202, 203, 204, 205, 206. As shown in FIG. 13C, integral pattern Z (decorative layer) which straddles over the plurality of doors can be formed.

Further, the shading of color can be applied by changing a film thickness of lacquer containing coating film layer 219 by partially repeatedly coating a lacquer paint containing an ultraviolet curing type lacquer containing paint as a main component or the like while setting a color of first resin coating film layer 216 which becomes the base colored layer to a predetermined color density. In this case, a light transmissivity changes corresponding to a film thickness of lacquer containing coating film layer 219 and hence, it appears that shading is applied to the surface as viewed from the outside. Further, the gradation such as shading can be also formed by coating color powder to the surface of first resin coating film layer 216 which becomes the base colored layer and by changing a coating amount of color powder. In this case, a pattern or the like can be formed in addition to shading. The ornamentation such as the above-mentioned shading can be formed by suitable selection when necessary.

Further, a brightening treatment is applied to the surface of exterior base member 215 and hence, by making first resin coating film layer 216 which becomes the base colored layer colorless transparent or light color in the same manner as second resin coating film layer 218, an appearance of lacquer containing coating film layer 219 as viewed from the surface can be made colorful. With such a configuration, it is possible to obtain ornamental exterior plate 207 having higher texture.

In this exemplary embodiment, a brightening treatment is applied to a surface of exterior base member 215 by polishing, additional working of a luster material, a chemical treatment or the like. The application of the brightening treatment is not limited to the above, and it is sufficient for the brightening treatment to be applied to any one of the resin coating film layers below lacquer containing coating film layer 219 which becomes the outermost layer. For example, in the case of this exemplary embodiment, the brightening treatment may be performed by adding a luminous material made of metal powder or the like to first resin coating film layer 216 which becomes the base colored layer or second resin coating film layer 218.

Ornamental exterior plate 207 which constitutes a surface of the door may be configured such that front surface portion 207a and side surface portions 207b are integrally formed with each other by bending both end portions of ornamental exterior plate 207, and a resin coating film layer and a lacquer containing coating film layer are applied to front surface portion 207a and side surface portions 207b without forming a coating boundary. With such a configuration, a pattern and gradation can be expressed between front surface portion 207a and side surface portions 207b while straddling over doors 202, 203, 204, 205, 206 and hence, it is possible to further enhance the design property.

Further, exterior base member 215 of ornamental exterior plate 207 is configured such that lacquer containing coating film layer 219 is applied only to a front surface side and hence, coating can be performed by holding a back surface side of exterior base member 215 using a jig at the time of coating thus enhancing productivity.

To ornamental exterior plate 207, forming such as trimming, bending and the like for forming an outer profile is performed after a coating step including coating of lacquer containing coating film layer 219 which is an outermost layer is finished. Accordingly, ornamental exterior plate 207 can be packed in a flat plate state before working and hence, a large number of ornamental exterior plates 207 can be delivered at one time. With such a configuration, cost per one ornamental exterior plate 207 can be suppressed, and the enhancement of quality attributed to easy handling can be realized.

Refrigerator 200 of this exemplary embodiment may be selectively provided with the respective constitutional elements described in refrigerator 100 of the above-mentioned first exemplary embodiment to fourth exemplary embodiment. For example, in refrigerator 200, interior member 30 where a coating film layer having a lacquer containing paint having an antibacterial function is formed on an inner portion of body 1, 201 Interior member 30 may be detachably mounted on body 1, 201. Placing shelf 11 may be provided to the inside of body 1, 201, and at least a portion of placing shelf 11 may be constituted by interior member 30. Accommodating container 12 may be disposed in the inside of body 1, 201, and at least a portion of accommodating container 12 may be constituted by interior member 30. Cooling plate 26 may be disposed in the inside of body 1, 201, and at least a portion of cooling plate 26 may be constituted by interior member 30. Interior member 30 may be integrally formed with inner box 4 of refrigerator 200. A plurality of coating film layers containing the coating film layer may be formed on interior member 30, and at least one of the plurality of coating film layers may have a luminous material. Further, antibacterial device 22 may be disposed in the inside of body 1, 201. Still further, heat insulating member 5 may be disposed between inner box 4 and outer box 3 of body 1, 201.

### (Sixth exemplary embodiment)

FIG. 5A is also an enlarged cross-sectional view of an ornamental exterior plate according to a sixth exemplary embodiment of the present invention, and FIG. 5B is also an enlarged front view of the exterior plate according to the sixth exemplary embodiment of the present invention. In FIG. 5A and FIG. 5B, parts identical with the parts in the fifth exemplary embodiment are given the same symbols and their description is omitted, and the description is made mainly with respect to parts which make this exemplary embodiment different from the fifth exemplary embodiment.

In this exemplary embodiment, ornamental exterior plate 207 of refrigerator 200 may be configured such that a plurality of decorative layers 217 are formed on a surface of first resin coating film layer 216 which becomes a base colored layer. That is, decorative layer 217 is constituted by three layers consisting of decorative layers 217-1, 217-2, 217-3, for example, and these decorative layers 217-1, 217-2, 217-3 are formed by using gold powder, color powder, mother-of-pearl, a foil or the like. Further, in this exemplary embodiment, second decorative layer 220 is formed also on a surface of lacquer containing coating film layer 219.

With such a configuration, with respect to ornamental exterior plate 207, in decorative layer 217, a lacquering is formed by overlapping decorative layers 217-1, 217-2, 217-3 for example and hence, it is possible to impart a sense of perspective to a pattern. In addition, second decorative layer 220 is formed also on the surface of lacquer containing coating film layer 219 and hence, the sense of perspective can be expressed also between decorative layers 217-1, 217-2, 217-3 and second decorative layer 220. Accordingly, it is possible to obtain ornamental exterior plate 207 having higher texture.

### (Seventh exemplary embodiment)

FIG. 6 is a cross-sectional view of an ornamental exterior plate according to a seventh exemplary embodiment of the present invention. Also in FIG. 6, parts identical with the parts in the fifth exemplary embodiment are given the same symbols and their description is omitted, and the description is made mainly with respect to parts which make this exemplary embodiment different from the fifth exemplary embodiment.

In ornamental exterior plate 207 of this exemplary embodiment, third decorative layer 221 is further formed on a surface side of second resin coating film layer 218. Third resin coating film layer 222 which forms an intermediate coating and is made of an urethane-based resin paint in the same manner as first resin coating film layer 216 and second resin coating film layer 218 is further formed on third decorative layer 221. Lacquer containing coating film layer 219 is further formed on third resin coating film layer 222. Third resin coating film layer 222 is configured such that a light refractive index of third resin coating film layer 222 is set lower than a light refractive index of lacquer containing coating film layer 219 by regulating an amount of urethane resin particles or the like.

With such a configuration, the feeling of depth of ornamental exterior plate 207 can be increased by the difference in light refractive index between lacquer containing coating film layer 219 and third resin coating film layer 222 thus acquiring the higher design property. Further, third resin coating film layer 222 having low refractive index is formed below lacquer containing coating film layer 219 and hence, reflection of light on a layer which is formed on second resin coating film layer 218, first resin coating film layer 216 which becomes a base colored layer, or exterior base member 215 and to which the brightening treatment is applied can be suppressed thus acquiring nuanced feeling of depth whereby texture can be further enhanced.

### (Eighth exemplary embodiment)

FIG. 7 is a cross-sectional view of an ornamental exterior plate according to an eighth exemplary embodiment of the present invention. Also in FIG. 7, parts identical with the parts in the fifth exemplary embodiment are given the same symbols and their description is omitted, and the description is made mainly with respect to parts which make this exemplary embodiment different from the fifth exemplary embodiment.

In ornamental exterior plate 207 according to the eighth exemplary embodiment of the present invention, recessed portion 223 is formed on a surface of exterior base member 215 by laser working or the like, and first resin coating film layer 216 which becomes a base colored layer, decorative layer 217, second resin coating film layer 218, and lacquer containing coating film layer 219 are formed on recessed portion 223.

With such a configuration, in ornamental exterior plate 207, reflection of light on a recessed surface of recessed portion 223 differs corresponding to a viewing angle due to refraction of light on lacquer containing coating film layer 219 and hence, it is possible to impart variations to an appearance of a pattern formed by recessed portion 223 whereby texture of ornamental exterior plate 207 can be further enhanced. Particularly, by applying coloring to recessed portion 223, variations in appearance of the pattern can be made further vivid thus enhancing the design property further effectively.

### (Ninth exemplary embodiment)

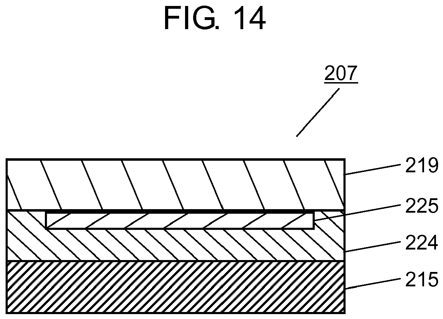

FIG. 14 is a cross-sectional view of an ornamental exterior plate according to a ninth exemplary embodiment of the present invention. Also in FIG. 14, parts identical with the parts in the fifth exemplary embodiment are given the same symbols and their description is omitted, and the description is made mainly with respect to parts which make this exemplary embodiment different from the fifth exemplary embodiment.

In ornamental exterior plate 207 according to the ninth exemplary embodiment of the present invention, resin film layer 224 is formed on a surface of exterior base member 215 using a laminated film, and coloring and transfer 225 of a pattern are applied to resin film layer 224.

With such a configuration, in ornamental exterior plate 207, by sandwiching resin film layer 224 between exterior base member 215 and lacquer containing coating film layer 219, variations are imparted to an appearance due to the difference in refraction index and in light transmissivity between the lacquer containing coating film layer and the resin film layer so that feeling of depth is increased thus obtaining ornamental exterior plate 207 having higher texture.

By providing the exterior base member having resin film layer 224, compared to a case where a film layer is formed on exterior base member 215 by resin coating, moldability can be enhanced thus suppressing the increase in cost and realizing the enhancement of quality.

### (Tenth exemplary embodiment)

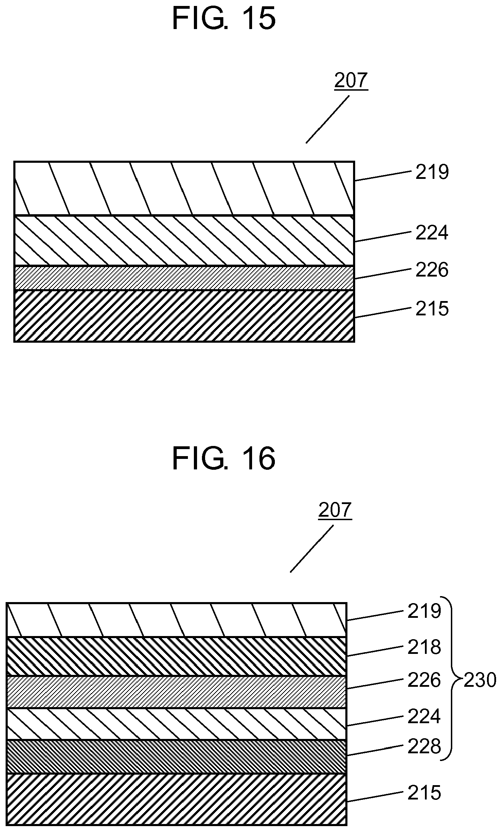

FIG. 15 is a cross-sectional view of an ornamental exterior plate according to a tenth exemplary embodiment of the present invention. Also in FIG. 15, parts identical with the parts in the fifth exemplary embodiment are given the same symbols and their description is omitted, and the description is made mainly with respect to parts which make this exemplary embodiment different from the fifth exemplary embodiment.

In ornamental exterior plate 207 according to the tenth exemplary embodiment of the present invention, printed layer 226 to which coloring and a pattern are applied is formed between resin film layer 224 and exterior base member 215.

With such a configuration, in ornamental exterior plate 207, the design property of ornamental exterior plate 207 can be enhanced as a whole. A decorative working can be easily applied to a large area by printing and hence, the increase in cost can be suppressed and, further, damage and adhesion of smudges and the like on printed layer 226 to which decoration or the like is applied can be prevented thus also enhancing quality of the ornamental exterior plate 207.

### (Eleventh exemplary embodiment)

FIG. 16 is a cross-sectional view of an ornamental exterior plate according to eleventh exemplary embodiment of the present invention. Also in FIG. 16, parts identical with the parts in the fifth exemplary embodiment are given the same symbols and their description is omitted, and the description is made mainly with respect to parts which make this exemplary embodiment different from the fifth exemplary embodiment.

In ornamental exterior plate 207 according to the eleventh exemplary embodiment of the present invention, film member 230 is formed on exterior base member 215. Film member 230 is formed such that adhesive layer 228 is formed in a state where adhesive layer 228 is brought into contact with exterior base member 215. Resin film layer 224 is formed on adhesive layer 228. Printed layer 226 to which decoration or the like is applied, second resin coating film layer 218, and lacquer containing coating film layer 219 are further formed on resin film layer 224. Film member 230 is integrally formed with exterior base member 215 by insert molding.

With such a configuration, a coating film can be formed on exterior base member 215 in a state of film member 230 and hence, productivity can be enhanced thus suppressing the increase in cost.

In the above-mentioned fifth to eleventh exemplary embodiments, ornamental exterior plate 207 is detachably formed on the surface of the door. However, the present invention is not limited to such a configuration. For example, a frame body may be mounted on an end surface or an end portion of an outer surface of a domestic electric appliance, and ornamental exterior plate 207 may be detachably formed by way of the frame body. Further, a projection which is formed on a back surface of ornamental exterior plate 207 may be fitted in a recessed portion formed on the outer surface. That is, regardless of a mounting and demounting method of ornamental exterior plate 207, it is sufficient that ornamental exterior plate 207 be formed detachably with respect to an outer surface of a domestic electric appliance.

In the above-mentioned fifth to eleventh exemplary embodiments, the description has been made with respect to the configuration of ornamental exterior plate 207 where the respective coating film layers and lacquer containing coating film layer 219 are formed using exterior base member 215 as a base. However, ornamental exterior plate 207 may be configured such that the respective coating film layers other than exterior base member 215 are formed into a film shape, and these film-shaped respective coating film layers are adhered to exterior base member 215. With such a configuration, quality of the respective coating film layers can be made uniform and, at the same time, the reduction of cost can be realized.

The respective coating film layers other than exterior base member 215 may be formed into a film shape, and these films per se may be detachably disposed on an outer surface of a domestic electric appliance. With such a configuration, design of the outer surface of the domestic electric appliance can be easily changed at low cost.

### INDUSTRIAL APPLICABILITY

As has been described above, according to the present invention, it is possible to provide an interior member having an antibacterial property and a design property simultaneously, and a domestic electric appliance which uses such an interior member. Further, according to the present invention, it is possible to provide a domestic electric appliance which can easily realize the enhancement of a design property and the enhancement of a cleaning property. Accordingly, the present invention can be widely applicable to household-use and business-use domestic electric appliances including refrigerators, various types of beauty and medical equipment and the like.

### REFERENCE MARKS IN THE DRAWINGS

1, 201: body
2, 202, 203, 204, 205, 206: door
3: outer box
4: inner box
5: heat insulating member
11: shelf
12: case (storage container)
13: hermetically-sealed case
14: case lid
21: cooling device
22: antibacterial device
23: blowing fan
24: device cover
26: cooling plate
30: interior member
31: interior base member
32: first coating film layer
33: second coating film layer
34: lacquer containing coating film layer
35, 35-1, 35-2, 35-3: decorative layer
36: third coating film layer
37: second decorative layer
38: third decorative layer
39, 223: recessed portion
207: ornamental exterior plate (exterior member)
208: inner surface plate
209, 210: decorative cover
211: foamed heat insulating member
212: grip portion
215: exterior base member
216: first resin coating film layer
217, 217-1, 217-2, 217-3: decorative layer
218: second resin coating film layer
219: lacquer containing coating film layer
220: second decorative layer
221: third decorative layer
222: third resin coating film layer
224: resin film layer
225: coloring and transfer of pattern
226: printed layer
228: adhesive layer
230: film member
X: shading
Y: partial coloring and gradation
Z: integral pattern between doors

## Claims

1. A domestic electric appliance comprising:
a body having an opening portion; and
a door mounted on the opening portion, wherein an interior member on which a coating film layer having a lacquer containing paint having an antibacterial function is formed is provided to an inside of the body.

2. The domestic electric appliance according to claim 1, further comprising an exterior member on which the coating film layer having the lacquer containing paint is formed.

3. The domestic electric appliance according to claim 1 or 2, wherein the coating film layer contains an ultraviolet curing type lacquer containing paint as a main component.

4. The domestic electric appliance according to any one of claims 1 to 3, wherein the interior member is detachably mounted on the body.

5. The domestic electric appliance according to any one of claims 2 to 4, wherein the exterior member is detachably mounted on the body.

6. The domestic electric appliance according to any one of claims 1 to 5, wherein a placing shelf is disposed in the inside of the body, and at least a portion of the placing shelf is constituted by the interior member.

7. The domestic electric appliance according to any one of claims 1 to 6, wherein a storage container is disposed in the inside of the body, and at least a portion of the storage container is constituted by the interior member.

8. The domestic electric appliance according to any one of claims 1 to 7, wherein a cooling plate is disposed in the inside of the body, and at least a portion of the cooling plate is constituted by the interior member.

9. The domestic electric appliance according to any one of claims 1 to 8, wherein the body includes an inner box and an outer box, and the interior member is integrally formed with the inner box.

10. The domestic electric appliance according to any one of claims 1 to 9, wherein a plurality of coating film layers including the coating film layer are formed on the interior member, and at least one of the plurality of coating film layers has a luminous material.

11. The domestic electric appliance according to any one of claims 1 to 10, wherein an antibacterial device is provided to the inside of the body.

12. The domestic electric appliance according to any one of claims 1 to 11, wherein a cooling device is provided to the inside of the body.

13. The domestic electric appliance according to any one of claims 9 to 12, wherein a heat insulating member is disposed between the inner box and the outer box of the body.

14. The domestic electric appliance according to any one of claims 2 to 13, wherein the exterior member is integrally formed with a member which constitutes an external appearance of the body.

15. The domestic electric appliance according to any one of claims 2 to 14, wherein the exterior member has a surface which constitutes an external appearance of the domestic electric appliance, and the surface is formed into a curved surface.

16. The domestic electric appliance according to any one of claims 2 to 15, wherein the exterior member has a plurality of coating film layers including the coating film layer, and at least one of the plurality of coating film layers has a luminous material.
